# EUROPEAN PATENT SPECIFICATION

(11) **EP 3 767 540 B1**
(45) Date of publication and mention of the grant of the patent: **22.03.2023**
(21) Application number: 19768202.4
(22) Date of filing: 25.01.2019
(51) Int. Cl.: G06K 19/07, G06F 12/00, G06K 19/077, G11B 23/087, H04B 5/02

(54) **NON-CONTACT COMMUNICATION MEDIUM, RECORDING MEDIUM CARTRIDGE, DRIVING METHOD FOR NON-CONTACT COMMUNICATION MEDIUM AND PROGRAM**
KONTAKTLOSES KOMMUNIKATIONSMEDIUM, AUFZEICHNUNGSMEDIUMKASSETTE, ANSTEUERUNGSVERFAHREN FÜR KONTAKTLOSES KOMMUNIKATIONSMEDIUM UND PROGRAMM
MOYEN DE COMMUNICATION SANS CONTACT, CARTOUCHE DE SUPPORT D'ENREGISTREMENT, PROCÉDÉ DE PILOTAGE POUR MOYEN DE COMMUNICATION SANS CONTACT ET PROGRAMME

(30) Priority: 15.03.2018 JP 2018047480
(43) Date of publication of application: 20.01.2021
(73) Proprietor: Sony Semiconductor Solutions Corporation, Atsugi-shi, Kanagawa 243-0014 (JP); Sony Group Corporation, Tokyo 108-0075 (JP)
(72) Inventor: NAKANO, Hiroaki, Atsugi-shi, Kanagawa 243-0014 (JP); FUJITA, Hiroaki, Atsugi-shi, Kanagawa 243-0014 (JP); NAKASHIO, Eiji, Tokyo 108-0075 (JP)
(74) Representative: MFG Patentanwälte Meyer-Wildhagen Meggle-Freund Gerhard PartG mbB
(86) International application number: PCT/JP2019/002525
(87) International publication number: WO 2019/176325

(56) References cited:
- EP-A2- 2 472 437
- JP-A- S58 154 080
- JP-A- 2004 206 409
- JP-A- 2005 078 181
- JP-A- 2005 191 961
- JP-A- 2008 225 535
- JP-A- 2010 087 846
- US-A1- 2008 136 603

## Description

### Technical Field

The present technology relates to, for example, a non-contact communication medium to be housed in a magnetic tape cartridge, a recording medium cartridge including the non-contact communication medium, a method of driving a non-contact communication medium, and a program.

### Background Art

In recent years, a magnetic recording medium has been widely used for backing up electronic data, and the like. As one magnetic recording medium, for example, a magnetic tape cartridge has a large capacity and can be preserved for a long time, and thus, the magnetic tape cartridge has attracted increasing attention as a storage medium for big data and the like.

For example, a magnetic tape cartridge of the LTO (Linear Tape Open) standard includes an RFID (Radio Frequency Identification) tag called a cartridge memory (see, for example, Patent Literature 1). The cartridge memory includes an antenna and an IC chip for communication and recording, and is configured to be capable of reading and writing production management information of the magnetic tape, the outline of the recorded content, and the like. The cartridge memory receives a signal magnetic field transmitted from a tape drive (reader/writer) to generate electric power, and thus operates without power supply.

US 2008/136603 A1 discloses a battery-powered RFID tag capable of reducing power consumption and a method of waking up the RFID tag. The battery-powered RFID tag has an activated mode where a general command is detected by decoding a signal received from an RFID tag reader and the general command is executed and a standby mode where the general command is not detected. If a voltage of a continuous wave detected from the signal is equal to or higher than a predetermined voltage or if a wake-up command is detected from the signal, the state of the RFID tag is changed from the standby mode to the activated mode. In addition, the RFID tag is driven by a higher one between the voltage of the continuous wave and a voltage of a built-in battery.

EP 2 472 437 A2 discloses an RFID system in which an RFID tag has an adjustable detection range. An RFID system includes an RFID reader that receives a signal, reads the signal and transmits a command signal; and an RFID tag that has unique information, senses the magnitude of the command signal received from the RFID reader, generates a voltage corresponding to the magnitude, and transmits a response signal corresponding to the generated voltage to the RFID reader.

### Citation List

### Patent Literature

Patent Literature 1: Japanese Patent Application Laid-open No. 2009-211743

### Disclosure of Invention

### Technical Problem

In recent years, the memory size of the cartridge memory has become larger in proportion to the increase in the recording data size of the magnetic tape. As the memory size of the cartridge memory increases, the power consumed by the cartridge memory also increases. Meanwhile, since this type of cartridge memory is required to operate at a constant magnetic field strength, there is a limitation on the electric power that can be drawn from the antenna. Accordingly, there is a need for a technology for driving a cartridge memory with electric power that can be drawn from an antenna independent of the memory size and ensuring stable communication with a reader/writer.

In view of the circumstances as described above, it is an object of the present technology to provide a non-contact communication medium capable of ensuring stable communication with electric power that can be drawn from an antenna independent of the memory size, a recording medium cartridge including the non-contact communication medium, a method of driving the non-contact communication medium, and a program.

### Solution to Problem

According to a first aspect, the present invention provides a non-contact communication medium in accordance with independent claim 1. According to a second aspect, the present invention provides a recording medium cartridge in accordance with independent claim 8. According to a third aspect, the present invention provides a method of driving a non-contact communication medium in accordance with independent claim 9. According to a fourth aspect, the present invention provides a program in accordance with independent claim 12. Further aspects are set forth in the dependent claims, the drawings and the following description.

A non-contact communication medium according to an embodiment of the present technology includes: a voltage generation unit; a memory unit; a clock signal generation unit; and a control unit.

The voltage generation unit includes an antenna coil for transmission/reception, and receives a signal magnetic field from an external device to generate a voltage.

The memory unit stores one or more circuit parameters set in the voltage generation unit, and predetermined management information.

The clock signal generation unit is configured to be capable of selectively generating clock signals having two or more different frequencies.

The control unit is configured to select a frequency of a clock signal to be supplied to the memory unit from the clock signal generation unit.

As a result, it is possible to ensure stable communication with electric power that can be drawn from an antenna independent of the memory size.

The control unit may be configured to select, when reading the circuit parameter, a first clock signal of a first frequency and select, when reading the management information, a second clock signal of a second frequency higher than the first frequency.

The voltage generation unit may include a resonant circuit and a resonant capacitance adjustment unit, the resonant circuit including the antenna coil, the resonant capacitance adjustment unit adjusting a resonant frequency of the resonant circuit, and the memory unit may be configured to store, as the circuit parameter, a resonant capacitance value set in the resonant capacitance adjustment unit.

The voltage generation unit may further include a power source circuit that generates a voltage from the resonant circuit, and the memory unit may be configured to store, as the circuit parameter, a reference voltage adjustment value for setting a reference voltage of the power source circuit.

The control unit may be configured to select the first clock signal when writing information to the memory unit.

The control unit may be configured to select a frequency of the clock signal on a basis of an operation request from the external device.

The non-contact communication medium may further include a monitoring unit that monitors a generated voltage of the voltage generation unit, and the control unit may be configured to select a frequency of the two or more clock signals on a basis of output of the monitoring unit.

The clock signal generation unit may be configured to generate a clock signal of a frequency multiplied by the frequency of the signal magnetic field.

A recording medium cartridge according to an embodiment of the present technology includes: an information recording medium; a cartridge body that houses the information recording medium; and a non-contact communication medium.

The non-contact communication medium includes a voltage generation unit that includes an antenna coil for transmission/reception, and receives a signal magnetic field from an external device to generate a voltage, a memory unit that stores one or more circuit parameters set in the voltage generation unit, and predetermined management information, a clock signal generation unit configured to be capable of selectively generating clock signals having two or more different frequencies, and a control unit configured to select a frequency of a clock signal to be supplied to the memory unit from the clock signal generation unit. The non-contact communication medium is housed in the cartridge body.

A method of driving a non-contact communication medium according to an embodiment of the present technology includes: reading, with a clock signal of a first frequency, a circuit parameter of a voltage generation unit that generates a voltage on a basis of a signal magnetic field from an external device received via an antenna coil.

Predetermined management information is read from the memory unit with a clock signal of a second frequency higher than the first frequency, and the read predetermined management information is transmitted to the external device.

The circuit parameter may be a resonant capacitance value of a resonant circuit including the antenna coil.

The circuit parameter may be a reference voltage adjustment value for setting a reference voltage of the voltage generation unit.

A program according to an embodiment of the present technology causes a control unit of a non-contact communication medium to execute the steps of:
reading, with a clock signal of a first frequency, a circuit parameter of a voltage generation unit that generates a voltage on a basis of a signal magnetic field from an external device received via an antenna coil; and
reading, with a clock signal of a second frequency higher than the first frequency, predetermined management information from the memory unit, and transmitting the read predetermined management information to the external device.

### Advantageous Effects of Invention

As described above, in accordance with the present technology, it is possible to ensure stable communication with electric power that can be drawn from an antenna independent of the memory size.

It should be noted that the effect described here is not necessarily limitative and may be any effect described in the present disclosure.

### Brief Description of Drawings

[Fig. 1] Fig. 1 is an exploded perspective view showing a magnetic tape cartridge according to an embodiment of the present technology.
[Fig. 2] Fig. 2 is a schematic perspective view of a tape drive device.
[Fig. 3] Fig. 3 is a schematic plan view showing a non-contact communication medium mounted on the above-mentioned magnetic tape cartridge.
[Fig. 4] Fig. 4 is an experimental result showing an example of the relationship between a resonant capacitance value and an acquired current value in the above-mentioned non-contact communication medium.
[Fig. 5] Fig. 5 is a diagram showing an example of an adjustment flow of the resonant capacitance value.
[Fig. 6] Fig. 6 is a block diagram showing a configuration of a non-contact communication medium according to an embodiment of the present technology.
[Fig. 7] Fig. 7 is a block diagram showing a configuration example of a memory unit in the above-mentioned non-contact communication medium.
[Fig. 8] Fig. 8 is a block diagram showing a configuration example of a clock signal generation unit in the above-mentioned non-contact communication medium.
[Fig. 9] Fig. 9 is a flowchart showing an example of a method of driving the above-mentioned non-contact communication medium.
[Fig. 10] Fig. 10 is a diagram showing an example of the temporal change of the input-terminal waveform of an antenna coil of the above-mentioned non-contact communication medium in a simplified manner.
[Fig. 11] Fig. 11 is a diagram showing another example of the temporal change of the input-terminal waveform of the antenna coil of the above-mentioned non-contact communication medium in a simplified manner.
[Fig. 12] Fig. 12 is a diagram showing still another example of the temporal change of the input-terminal waveform of the antenna coil of the above-mentioned non-contact communication medium in a simplified manner.
[Fig. 13] Fig. 13 is a block diagram showing a configuration of a non-contact communication medium according to a second embodiment of the present technology.
[Fig. 14] Fig. 14 is a flowchart showing an example of a method of driving the above-mentioned non-contact communication medium.
[Fig. 15] Fig. 15 is a flowchart showing an example of a method of driving a non-contact communication medium according to a third embodiment of the present technology.
[Fig. 16] Fig. 16 is a flowchart showing an example of a method of driving a non-contact communication medium according to a fourth embodiment of the present disclosure.

### Mode(s) for Carrying Out the Invention

Embodiments according to the present technology will be described below with reference to the drawings.

### <First embodiment>

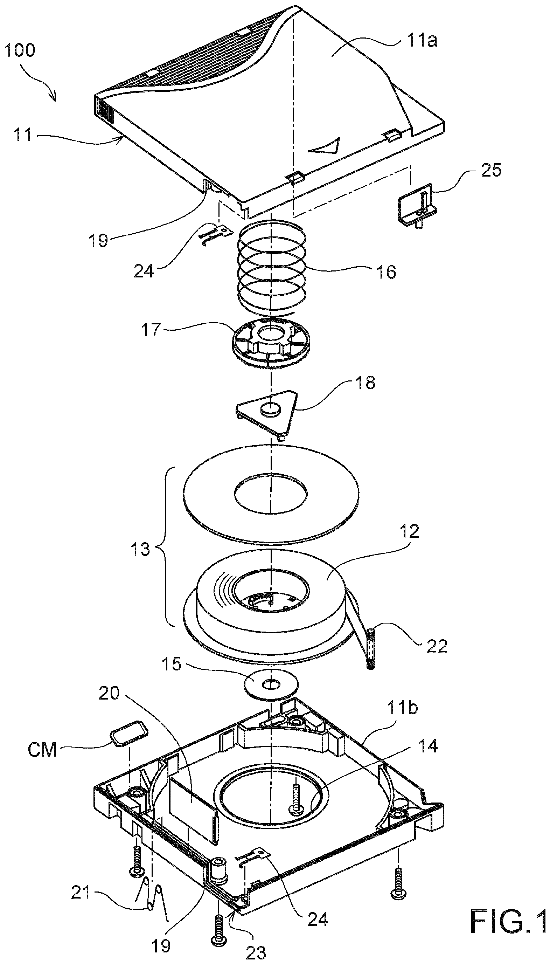

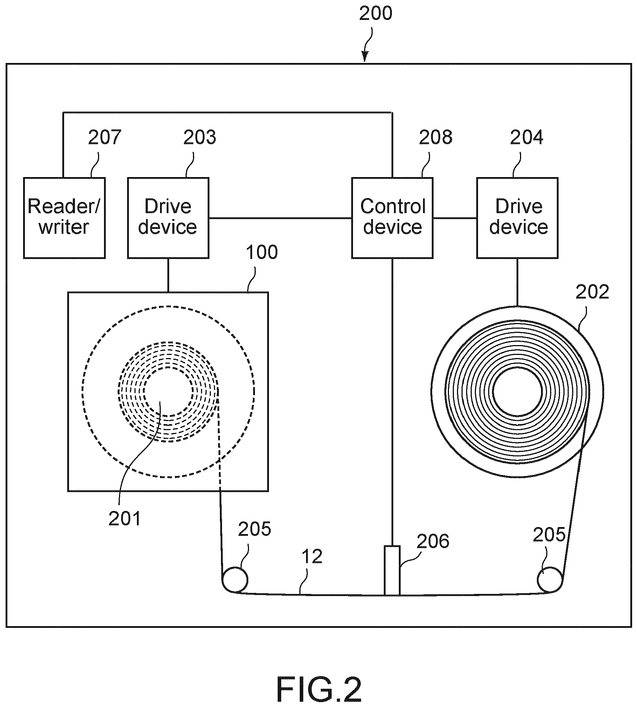

Fig. 1 is an exploded perspective view showing a magnetic tape cartridge according to an embodiment of the present technology, and Fig. 2 is a schematic perspective view of a tape drive device. In this embodiment, a magnetic tape cartridge of the LTO standard shown in Fig. 1 (hereinafter, referred to as the tape cartridge 100) will be described as a recording medium cartridge. Hereinafter, the configuration of the tape cartridge 100 and a tape drive device 200 shown in Fig. 2 will be schematically described.

### [Tape cartridge]

As shown in Fig. 1, the tape cartridge 100 includes a cartridge case 11 formed by connecting an upper shell 11a and a lower shell 11b by a plurality of screw members. A single tape reel 13 on which a magnetic tape 12 is wound is rotatably accommodated inside the cartridge case 11.

A chucking gear (illustration omitted) that engages with a spindle 201 (see Fig. 2) of the tape drive device 200 is formed in an annular shape at the bottom center of the tape reel 13, and the chucking gear is exposed to the outside through an opening 14 formed in the center of the lower shell 11b. An annular metal plate 15 magnetically attracted to the spindle 201 is fixed to the inner periphery side of the chucking gear.

A reel spring 16, a reel lock member 17 and a spider 18 are disposed between the inner surface of the upper shell 11a and the tape reel 13. They constitute a reel locking mechanism that prevents the tape reel 13 from rotating when the tape cartridge 100 is not in use.

A tape outlet 19 for drawing out one end of the magnetic tape 12 to the outside is provided in one side wall portion of the cartridge case 11. A slide door 20 for opening and closing the tape outlet 19 is disposed inside the side wall portion. The slide door 20 is configured to slide in a direction that opens the tape outlet 19 against the biasing force of a torsion spring 21 by engagement of the tape drive device 200 with a tape loading mechanism (not shown).

A leader pin 22 is fixed to one end portion of the magnetic tape 12. The leader pin 22 is configured to be attachable/detachable to/from a pin holding portion 23 provided on the inner side of the tape outlet 19. The pin holding portion 23 includes an elastic holder 24 for elastically holding the upper end portion and the lower end portion of the reader pin 22 between the upper wall inner surface of the cartridge case 11 (the inner surface of the upper shell 11a) and the bottom wall inner surface (the inner surface of the lower shell 11b), respectively.

Then, in addition to a safety tab 25 for preventing accidental erasure of information recorded on the magnetic tape 12, a cartridge memory CM capable of reading and writing the content related to the information recorded on the magnetic tape 12 in a non-contact manner is provided inside the other side wall of the cartridge case 21. The cartridge memory CM includes a non-contact communication medium in which an antenna coil, an IC chip, and the like are mounted on a substrate.

### [Tape drive device]

As shown in Fig. 2, the tape drive device 200 is configured to be capable of loading the tape cartridge 100. The tape drive device 200 is configured to be capable loading one tape cartridge 100, but may be configured to be capable of loading a plurality of tape cartridges 100 simultaneously.

The tape drive device 200 includes a spindle 201, a take-up reel 202, a spindle drive device 203, a reel drive device 204, a plurality of guide rollers 205, a head unit 206, a reader/writer 207, a control device 208, and the like.

The spindle 201 includes a head portion that engages with the chucking gear of the tape reel 13 through the opening 14 formed in the lower shell 11b of the tape cartridge 100. The spindle 201 raises the tape reel 13 by a predetermined distance against the biasing force of the reel spring 16, releasing the reel lock function by the reel lock member 17. Thus, the tape reel 13 is rotatably supported inside the cartridge case 11 by the spindle 201.

The spindle drive device 203 causes, in response to a command from the control device 208, the spindle 201 to rotate. The take-up reel 202 is configured to be capable of fixing the tip (leader pin 22) of the magnetic tape 12 drawn from the tape cartridge 100 via the tape loading mechanism (not shown). The plurality of guide rollers 205 guides the travelling of the magnetic tape 12 such that the tape path formed between the tape cartridge 100 and the take-up reel 202 is in a predetermined relative position relative to the head unit 206. The reel drive device 204 causes, in response to a command from the control device 208, the take-up reel 202 to rotate. When data signals are recorded/reproduced on/from the magnetic tape 12, the spindle 201 and the take-up reel 202 are caused to rotate by the spindle drive device 203 and the reel drive device 204 and thus, the magnetic tape 12 is caused to travel.

The head unit 206 is configured to be capable of recording data signals on the magnetic tape 12 or reproducing the data signals written to the magnetic tape 12 in response to a command from the control device 208.

The reader/writer 207 is configured to be capable of reading predetermined management information from the cartridge memory CM mounted on the tape cartridge 100 or recording predetermined management information on the cartridge memory CM in response to a command the from control device 208. As a communication system between the reader/writer 207 and the cartridge memory CM, for example, an ISO14443 system is adopted.

The control device 208 includes, for example, a computer including a CPU (Central Processing Unit), a storage unit, a communication unit, and the like, and integrally controls the respective units of the tape drive device 200.

### [Cartridge memory]

Next, detailed description of the cartridge memory CM will be described.

### (Basic configuration)

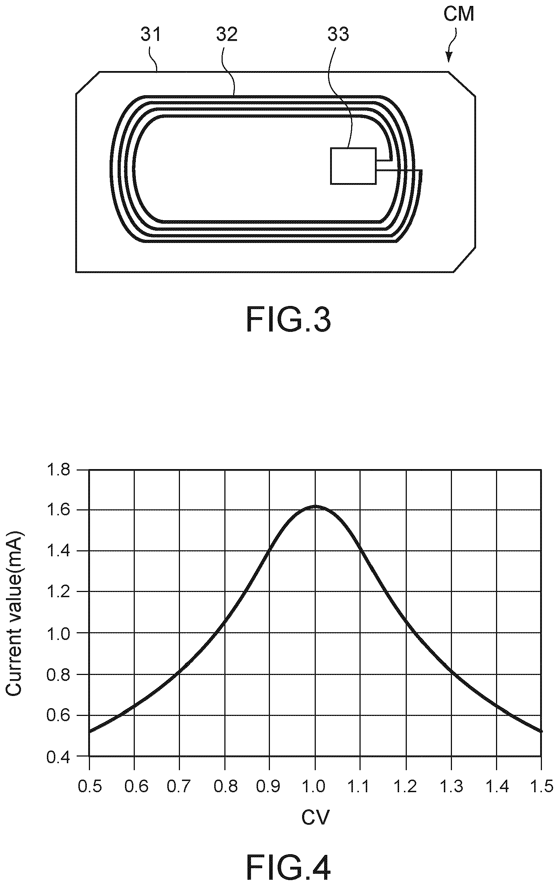

Fig. 3 is a schematic plan view showing the cartridge memory CM. The cartridge memory CM includes an RFID tag including a support substrate 31, an antenna coil 32, and an IC chip 33.

The support substrate 31 includes a relatively rigid wiring substrate such as a glass-epoxy substrate. The antenna coil 32 is a planar loop coil formed on the support substrate 31, and is made of a copper foil, an aluminum foil, or the like, which as a predetermined thickness. The IC chip 33 is mounted on the support substrate 31 and electrically connected to the antenna coil 32. The IC chip 33 includes, therein, a voltage generation unit a memory unit, a control unit, and the like, the voltage generation unit generating an activation voltage on the basis of a signal magnetic field from the reader/writer 207 received via the antenna coil 32, the memory unit storing predetermined management information regarding the tape cartridge 100, the control unit reading information from the memory unit.

The cartridge memory CM receives a signal magnetic field transmitted from the reader/writer 207 by the antenna coil 32 to generate power, and thus operates without power supply. The power supply/communication frequency from the reader/writer 207 is 13.56 MHz, which is the same as that of NFC (Near Field Communication). A non-volatile memory (NVM) is used for the memory incorporated in the IC chip 33.

Here, the memory size of the cartridge memory of the LTO standard is increasing in proportion to the increase in the size of data recorded on the magnetic tape. For example, the data size has been 4 kB in LTOs 1 to 3, but has increased to 8 kB in LTOs 4 and 5 and 16 kB in LTOs 6 and 7. It is expected that as the magnetic recording data size of LTOs further increases, the memory size of the cartridge memory increases.

However, as the memory size of the cartridge memory increases, the power consumed by the IC tends to increase. Further, also the electric power is assumed to increase associated with the increase in the memory size, e.g., the idle current of the power supply block increases due to the necessity to increase the stability of the power supply voltage to be supplied to the memory, or the digital power increases associated with processing complexity. In the standard, since it is specified as a requirement to operate at a constant magnetic field strength, innovation of ICs (reduced power consumption) and innovation antennas (increased power extraction from a reader/writer) that can cope with the increase in the electric power caused by the increase in the memory size may be further required in the future.

Meanwhile, in this type of cartridge memory, the resonant frequencies are adjusted by the capacitance built in the IC from the viewpoints of cost and reliability. However, the capacitive element of the IC has a variation in the capacitance value for each product due to variations in production. When the resonant frequency is shifted by such individual variation, the electric power can be drawn from the antenna is reduced.

Fig. 4 shows an experimental result showing an example of the relationship between the resonant capacitance value and the acquired current value. The horizontal axis indicates a rate of change of the resonant capacitance value, and the expected value (the capacitance value when the acquired current value is the highest) in the resonant capacitance is set to 1.0. Therefore, the resonant capacitance value of 1.1 represents a state in which the resonant capacitance is 10% larger than the expected value, and the resonant capacitance value of 0.9 represents a state in which the resonant capacitance is 10% smaller than the expected value. The vertical axis indicates the value of the current flowing to a constant load, which corresponds to electric power. As shown in the figure, when the resonant capacitance value deviates from the expected value, the current (electric power) that can be acquired decreases sharply. For example, when the resonant capacitance value varies by approximately 15%, the acquired current drops to 3/4 of that in the case of the expected value.

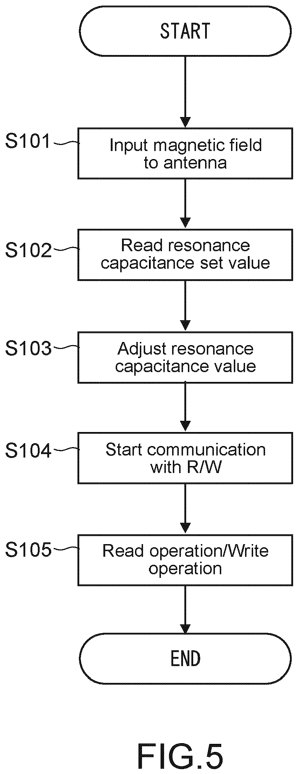

Several methods of adjusting the resonant capacitance inside the IC are conceivable. In the cartridge memory of LTO, a partial region of the non-volatile memory is used as a region for storing a parameter for adjusting the resonant capacitance, and the resonant capacitance can be adjusted without requiring additional hardware. In this case, the capacitance value inside the IC is measured in advance, and the capacitance value that is a correct value (expected value) or a set value relating to the difference between the measured value and a correct value (hereinafter, referred to as the resonant capacitance set value) is stored in the memory. Then, the resonant capacitance set value is read at the time of activation, and the resonant capacitance value is adjusted by using the read resonant capacitance set value as a correction parameter. Fig. 5 shows an example of the adjustment flow of the resonant capacitance value.

As shown in Fig. 5, first, the cartridge memory generates an activation voltage when a magnetic field is input from the outside (Step 101). When the IC is activated, the control unit reads the resonant capacitance set value from the memory and adjusts the resonant capacitance on the basis of the read value (Steps 102 and 103). Communication with the reader/writer is started after adjusting the resonant capacitance value. After that, information is read from the specified address in the memory in accordance with the operation requested by the reader/writer or information is written to the specified address of the memory (Steps 104 and 105).

However, in the flow shown in Fig. 5, it is the Step of reading the resonant capacity set value from the memory that can become a bottleneck in terms of electric power (Step 102). As described above, the electric power that can be acquired in a state where the capacitance value is shifted is lower than that in the case of the correct value (expected value) of the resonant capacitance, and the electric power for driving the memory tends to increase as the memory size increases. For this reason, there is a possibility that the process of reading the resonant capacitance set value (Step 102) stops due to power shortage and communication with the reader/writer is defective depending on the amount of deviation of the capacitance value before the adjustment of the resonant capacitance and the memory size.

In this regard, the cartridge memory CM in this embodiment is configured as follows in order to solve the above-mentioned concerns.

### (Configuration of cartridge memory according to this embodiment)

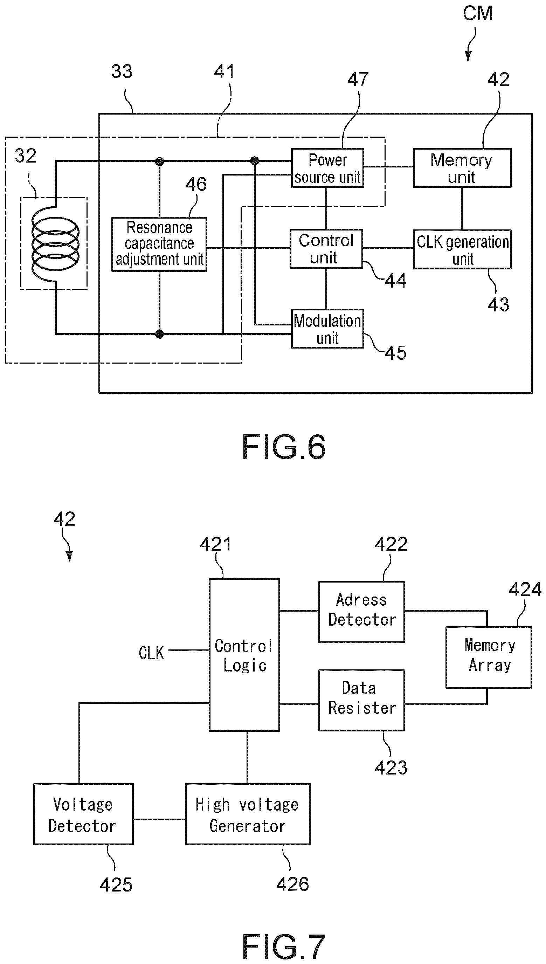

Fig. 6 is a block diagram showing a configuration of the cartridge memory CM in this embodiment. The cartridge memory CM includes a voltage generation unit 41, a memory unit 42, a clock signal generation unit 43, and a control unit 44. The voltage generation unit 41 includes the antenna coil 32, a power source unit 47, and a signal processing unit 45.

The voltage generation unit 41 includes the antenna coil 32, a resonant capacitance adjustment unit 46, and the power source unit 47. The voltage generation unit 41 is configured to be capable of receiving a signal magnetic field transmitted from the reader/writer 207 (see Fig. 2), which is an external device, to generate voltages.

The resonant capacitance adjustment unit 46 includes, for example, a parallel circuit or a series circuit of a plurality of capacitive elements, and a plurality of switching elements (transistors or the like) that is capable of electrically connecting or disconnecting an arbitrary capacitive element of the plurality of capacitive elements in response to a command of the control unit 44.

The power source unit 47 is a power source circuit that generate a voltage from the resonant circuit constituted by the antenna coil 32 and the resonant capacitance adjustment unit 46, and includes a rectifying circuit for converting an alternating current into a direct current, a regulator, an AD converter for converting an analog signal into a digital signal, and the like.

The memory unit 42 includes a non-volatile memory. The memory unit 42 stores one or more circuit parameters set in the voltage generation unit 41 and predetermined management information.

Examples of the circuit parameters include a resonant capacitance set value to be input to the resonant capacitance adjustment unit 46 and various adjustment values for adjusting the circuit properties of the power source unit 47. Examples of the predetermined management information include information regarding the tape cartridge 100 on which the cartridge memory CM is mounted, such as identification information (ID) of the tape cartridge 100 or the cartridge memory CM and management information of the data recorded on magnetic tape 12.

The memory unit 42 may further include a memory control unit that controls the non-volatile memory. Fig. 7 is a block diagram showing a configuration example of the memory unit 42. The memory unit 42 includes a memory control unit 421, an address detection unit 422, a data register 423, a memory array 424, a voltage detection unit 425, and a high voltage generation unit 426. The memory control unit 421 generates the voltage required to drive the memory array 424 in accordance with the frequency of the clock signal. As the size of the memory array 424 increases, the memory control unit 421 generates a higher voltage. The size of the memory array 424 is not particularly limited. The size of the memory array 424 is, for example, 8 kB or 16 kB, and may be 32 kB or more.

The clock signal generation unit 43 is configured to be capable of selectively generating clock signals of two or more distinct frequencies. The clock signal generation unit 43 is configured to be capable of receiving a command from the control unit 44 to provide a clock signal of a predetermined frequency to the memory unit 42.

The clock signal generation unit 43 typically includes one or more dividers. The plurality of dividers may be connected in series or in parallel. The clock signal generation unit 43 supplies the frequency obtained by dividing the frequency of the reference clock as a clock signal to the memory unit 42. As the reference clock, for example, the communication frequency (13.56 MHz) of the reader/writer 207 is used. Thus, it is possible to generate clock signals of two or more different frequencies relatively easily.

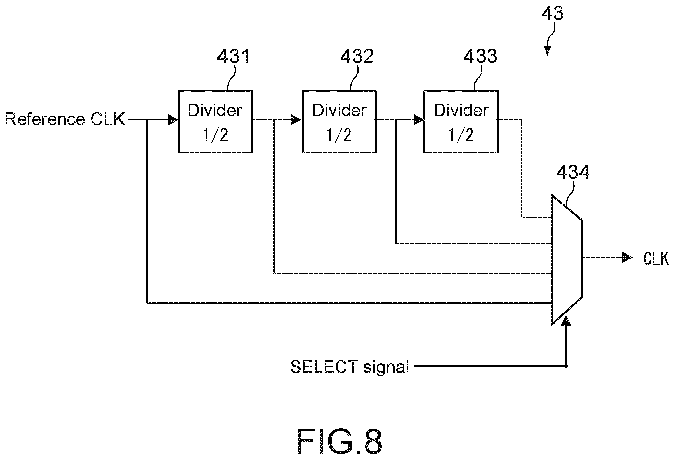

Fig. 8 is a block diagram showing a configuration example of the clock signal generation unit 43. In this example, three dividers 431, 432, and 433 are connected in series. The number of dividers may be one, two, or four or more.

In Fig. 8, the first to third dividers 431 to 433 divide the frequency of the input signal into 1/2. The first divider 431 outputs a clock signal of a frequency of 1/2 of the reference clock (13.56 MHz) to the second divider 432 and a selector circuit 434. The second divider 432 outputs a clock signal of a frequency of 1/4 of the reference clock to the third divider 433 and the selector circuit 434. The third divider 433 outputs a clock signal of a frequency of 1/8 of the reference clock to the selector circuit 434. The selector circuit 434 receives a control command (select signal) from the control unit 44, selects one of the above-mentioned clock signals of three different frequencies, and outputs the selected clock signal to the memory unit 42.

In this embodiment, the clock signal generation unit 43 is configured to be capable of generating a first clock signal (CLK1) of the first frequency and a second clock signal (CLK2) of the second frequency higher than the first frequency. The first frequency and the second frequency are not particularly limited, and can be arbitrarily set. For example, the first frequency is 848 kHz, which is 1/16 of 13.56 MHz, and the second frequency is 3.39 MHz, which is 1/4 of 13.56 MHz.

The signal processing unit 45 is a block that processes signals from the reader/writer 207 received via the antenna coil 32 or generates signals to be transmitted to the reader/writer 207 via the antenna coil 32, and includes a transmitting/receiving circuit including a modulating circuit and a demodulating circuit. The signal processing unit 45 also includes a circuit that extracts the clock frequency from the received signal and transmits the extracted clock frequency to the control unit 44.

The control unit 44 includes a computer including a CPU, an internal memory, and the like. The control unit 44 integrally controls the respective units of the cartridge memory CM by executing various programs stored in the internal memory. The internal memory includes a non-volatile memory and a volatile memory used as a work area. The various programs may be read from a portable storage medium or downloaded from a server device on a network.

The control unit 44 is configured to select the frequency of the clock signal supplied from the clock signal generation unit 43 to the memory unit 42. Specifically, the control unit 44 is configured to select, in the case where a circuit parameter such as the resonant capacitance set value is read from the memory unit 42 when the cartridge memory CM is activated, management information is read from the memory unit 42 in response to a request from the reader/writer 207, or management information is written to the memory unit 42 in response to a request from the reader/writer 207, a clock signal to be supplied to the memory unit 42.

For example, the control unit 44 is configured to select the first clock signal of the first frequency when reading a circuit parameter from the memory unit 42 and select a clock signal of a second frequency higher than the first frequency when reading management information from the memory unit 42.

The frequency of the clock signal to be supplied to the memory unit 42 corresponds to the access speed of reading/writing information from/to the memory unit 42. In many non-volatile memories, the power consumption is determined by the access speed, and the power consumption tends to increase as the access speed is higher. In other words, varying the access speed and the frequency of the clock signal to be supplied to the memory unit 42 are equivalent to each other.

In this regard, in the operation of reading a circuit parameter such as the resonant capacitance set value, by supplying the first clock signal (CLK1) to the memory unit 42 (reducing the accessing speed), it is possible to reduce the power consumption. Meanwhile, it is necessary to respond to a read request from the reader/writer 207 within a specified time, and there is a possibility that such a response is not possible in the response time by the read operation at a low clock frequency. For this reason, in response to a request for reading information from the reader/writer 207, the second clock signal (CLK2) is supplied to the memory unit 42 (the access speed is increased). After adjusting the resonant capacitance, the electric power drawn from the antenna coil 32 is greater than that before the adjustment, and thus, the required amount of electric power can be ensured even if a clock signal of a higher frequency is supplied to the memory unit 42.

### (Method of driving cartridge memory)

Next, the control unit 44 will be described in detail together with the process procedure of the control unit 44.

The method of driving the cartridge memory CM according to this embodiment includes: reading, with a clock signal of the first frequency (first clock signal CLK1), a circuit parameter (in this example, the resonant capacitance set value) of the voltage generation unit 41 that generates a voltage on the basis of a signal magnetic field from the reader/writer 207 (external device) received via the antenna coil 32; and reading, with a clock signal of the second frequency high than the first frequency (the second clock signal CLK2), predetermined management information from the memory unit 42 and transmitting the read predetermined management information to the reader/writer 207.

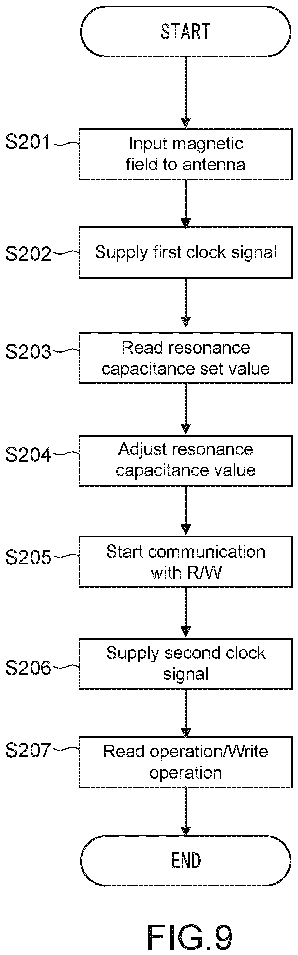

Fig. 9 is a flowchart showing an example of a method of driving the cartridge memory CM.

The cartridge memory CM generates an activation voltage when a magnetic field (polling signal) is input from the reader/writer 207 (Step 201), reads the resonant capacitance set value from the memory unit 42, and sets the read value to the resonant capacitance adjustment unit 46 to adjust the resonant capacitance (Steps 203 and 204) .

At this time, the control unit 44 selects the first clock signal (CLK1) as a clock signal for reading the resonant capacitance set value from the memory unit 42. This makes it possible to reduce the power consumption required for the operation of reading a circuit parameter from the memory unit 42 and read the resonant capacitance set value from the memory unit 42 even at the activation voltage before the adjustment of the resonant capacitance. Further, since enough time is allocated for the first response to the reader/writer 207 when the cartridge memory CM is activated, there is no possibility that the communication with the reader/writer 207 will be interrupted even if the time required to read the circuit parameter is long (the access speed is slow.

Then, after adjusting the resonant capacitance, communication with the reader/writer 207 is started, and management information is read from the specified address of the memory unit 42 in accordance with the operation requested by the reader/writer 207 or management information is written to the specified address of the memory unit 42 (Steps 205 and 207).

At this time, the control unit 44 selects the second clock signal (CLK2) having a frequency higher than the frequency of the first clock signal (CLK1) as a clock signal for reading the management information from the memory unit 42. Since the electric power generated by the voltage generation unit 41 after the adjustment of the resonant capacitance is larger than that before the adjustment, it is possible to sufficiently secure the electric power required to drive the memory unit 42 even if the frequency of the clock signal to be supplied to the memory unit 42 is increased. This makes it possible to quickly read/write management information from/to the memory unit 42. Therefore, a reply can be sent to the reader/writer 207 within a predetermined response time, and communication can be prevented from being interrupted.

Note that the timing of communication between the cartridge memory CM and the reader/writer 207 is not particularly limited, and may be when the tape cartridge 100 is loaded into the tape drive device 200, when the tape cartridge 100 is removed from the tape drive device 200, or when the tape cartridge 100 is driven by the tape drive device 200.

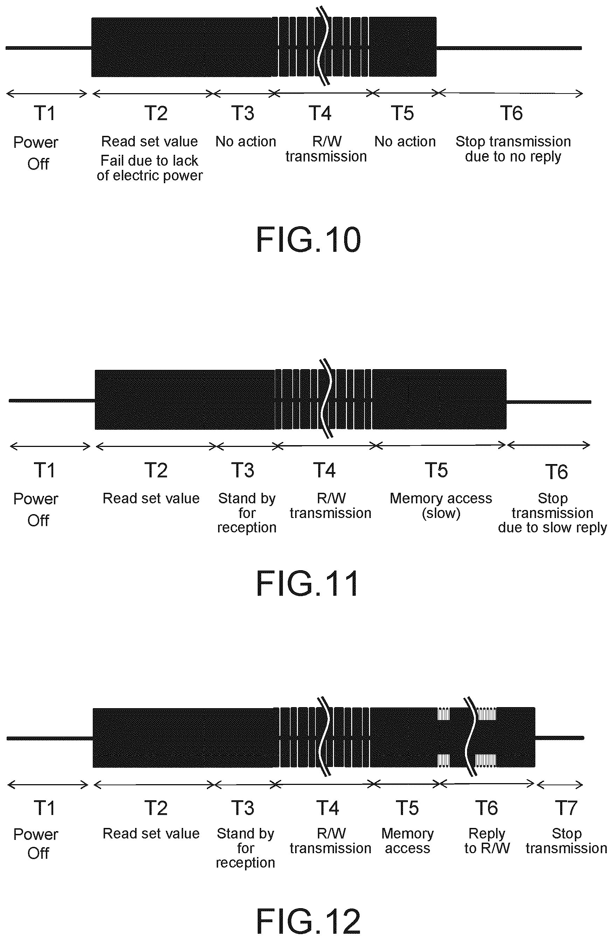

Fig. 10 to Fig. 12 each show the temporal change of the input-terminal waveforms of the antenna coil 32 of the cartridge memory CM in a simplified manner. Fig. 10 shows the state in which the second clock signal (CLK2) is continued to be used as a clock signal for reading to be supplied to the memory unit 42, Fig. 11 shows the state in which the first clock signal (CLK1) is continued to be used as a clock signal for reading to be supplied to the memory unit 42, and Fig. 12 shows the state in which the first clock signal (CLK1) and the second clock signal (CLK2) are used in combination as clock signals for reading to be supplied to the memory unit 42.

When a polling signal from the reader/writer 207 is input, a voltage is generated at the input-terminal of the antenna coil 32 and reading of the resonant capacitance set value is performed from the memory unit 42 in a period T2. In the case where the frequency of a clock signal to be supplied to the memory unit 42 is relatively high, as shown in Fig. 10, there is a possibility that the activation voltage before adjustment of the resonant capacitance is too low and reading of the resonant capacitance set value will fail (period T2). If this happens, the operation of the cartridge memory CM will stop (period T3), and communication will be interrupted (periods T4 to T6) because the cartridge memory CM will not be capable of responding to subsequent requests from the reader/writer 207.

Meanwhile, in the case where the frequency of a clock signal to be supplied to the memory unit 42 is relatively low, as shown in Fig. 11, it is possible to read the resonant capacitance set value even if the activation voltage before the adjustment of the resonant capacitance is low (period T2). However, there is a possibility that information cannot be returned within the specified response period for subsequent requests to read information from the reader/writer 207 and transmission from the reader/writer 207 stops because the reading speed of the information from the memory unit 42 is too slow (periods T5 and T6).

On the other hand, in accordance with this embodiment, since the frequency of a clock signal to be supplied to the memory unit 42 before and after the adjustment of the resonant capacitance is set to be variable, as shown in Fig. 12, it is possible to read the resonant capacitance set value and to appropriately handle with a request for reading information from the reader/writer 207 within the response period (periods T2 to T6).

As described above, in accordance with this embodiment, by compensating the power shortage at the time of activation by the limitation of the access speed to the memory unit 42, it is possible to appropriately adjust the resonant capacitance while reducing the power consumption of the memory unit 42. Further, after adjusting the resonant capacitance, by increasing the access speed to the memory unit 42, a reply to a request for reading information from the reader/writer 207 can be realized within a predetermined response period, and thus, an appropriate communication operation can be ensured with the reader/writer 207. Thus, stable communication can be ensured with electric power that can be drawn from the antenna coil 32 without depending on the memory size of the memory unit 42.

### <Second embodiment>

Next, a second embodiment of the present technology will be described. This embodiment is applicable not only to the resonant capacitance set value but also to adjustment of other circuit parameters of the voltage generation unit 41.

For example, in order to increase the capacity of the memory unit 42 and improve the reliability of the memory unit 42, it is required to increase the accuracy of the reference voltage of the power source unit 47 (see Fig. 6). Besides the reference voltage, an increase in the accuracy for setting the target voltage after rectification is required. In this regard, in this embodiment, a cartridge memory capable of adjusting the reference voltage of the power source unit 47 will be described as an example.

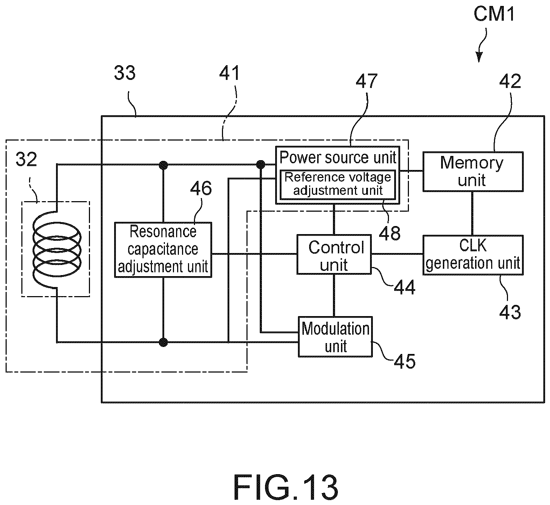

Fig. 13 is a block diagram showing the configuration of a cartridge memory CM1 in this embodiment. Hereinafter, configurations different from those in the first embodiment will be mainly described, and configurations similar to those in the first embodiment will be denoted by similar reference symbols, and description thereof will be omitted or simplified.

The cartridge memory CM1 according to this embodiment is different from that in the first embodiment in that the cartridge memory CM1 includes a reference voltage adjustment unit 48 capable of adjusting the reference voltage of the power source unit 47. The reference voltage adjustment unit 48 is for adjusting the characteristic value of the reference voltage generation circuit (BGR: Band Gap Reference) constituting the power source unit 47.

The reference voltage generation circuit generates a voltage used as a reference of the voltage value to be supplied to the respective units including the memory unit 42, but variation is likely to occur depending on individual differences such as circuit properties. In this regard, in this embodiment, the reference voltage adjustment value for setting the reference voltage of the power source unit 47 is stored as a circuit parameter in the memory unit 42, and the control unit 44 is configured to read the reference voltage adjustment value at the time of activation and set the reference voltage adjustment value to the reference voltage adjustment unit 48. As a result, since a highly accurate control voltage can be supplied to the respective units of the cartridge memory CM1, the stable operation of the memory unit 42 and the like can be ensured and the reliability can be enhanced.

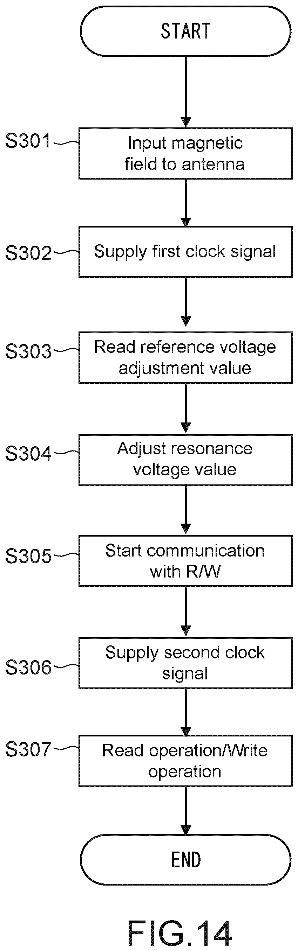

Fig. 14 is a flowchart showing an example of a method of driving the cartridge memory CM1.

In the case where the cartridge memory CM1 is activated, an activation voltage is generated when a magnetic field (polling signal) is input from the reader/writer 207 (Step 301), and the reference voltage adjustment value is read from the memory unit 42 with the first clock signal (CLK1) and set to the reference voltage adjustment unit 48 (Steps 302 to 304). The setting of the reference voltage adjustment value may be performed at the same time as the adjustment of the resonant capacity described in the first embodiment, and the adjustment of the resonant capacitance may be omitted if necessary.

Then, after adjusting the reference voltage, communication with the reader/writer 207 is started, and management information is read from the specified address of the memory unit 42 with the second clock signal (CLK2) or management information is written to the specified address of the memory unit 42 in accordance with the operation requested by the reader/writer 207 (Steps 305 to 307).

Also in this embodiment, it is possible to obtain the operation and effect similar to those in the first embodiment described above. In accordance with this embodiment, by limiting the access speed to the memory unit 42 to compensate the power shortage at the time of activation, it is possible to appropriately adjust the reference voltage of the power source unit 47 while reducing the power consumption of the memory unit 42. Further, after adjusting the reference voltage, by increasing the access speed to the memory unit 42, a reply to a request for reading information from the reader/writer 207 can be realized within a predetermined response period, and thus, an appropriate communication operation can be ensured with the reader/writer 207. Thus, stable communication can be ensured with the electric power that can be drawn from the antenna coil 32 without depending on the memory size of the memory unit 42.

### <Third embodiment>

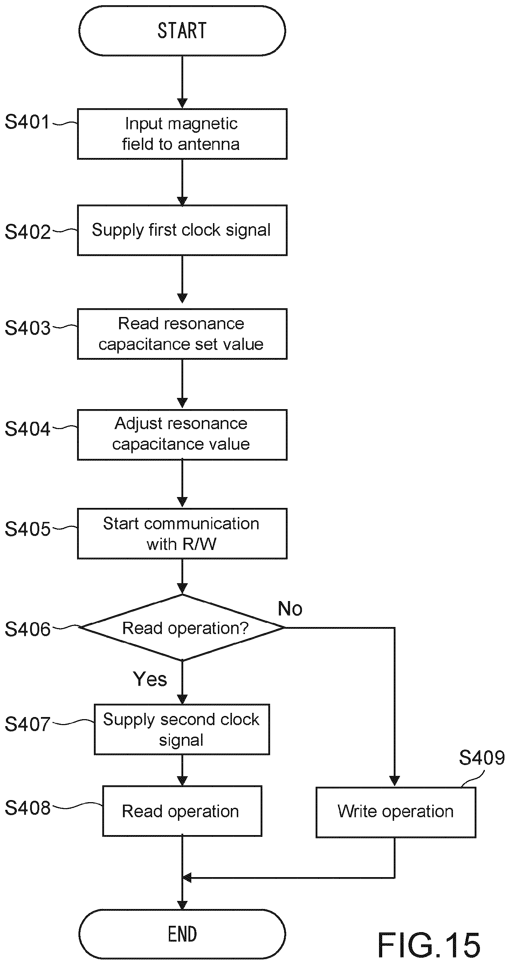

Fig. 15 is a flowchart showing an example of a method of driving a cartridge memory according to a third embodiment of the present disclosure. Hereinafter, configurations different from those in the first embodiment will be mainly described, and configurations similar to those in the first embodiment will be denoted by similar reference symbols, and description thereof will be omitted or simplified.

In the cartridge memory according to this embodiment, the control unit 44 is configured to select the frequency of the clock signal to be supplied to the memory unit 42 on the basis of the operation request from the reader/writer 207 (external device).

For example, in a tape cartridge of the standard other than the LTO standard or an information recording cartridge (optical discs, portable hard disc drives, and the like) other than magnetic tapes, the time required for an operation of writing information to the memory unit is set longer than the time required for an operation of reading information in some cases. In this case, the following flow can be applied as an example of the operation of the cartridge memory mounted on these recording medium cartridges.

As shown in Fig. 15, when an activation voltage is generated by inputting a magnetic field to the antenna coil 32, the control unit 44 reads the resonant capacitance set value from the memory unit 42 with the first clock signal (CLK1) and sets the read value to the resonant capacitance adjustment unit 46 (Steps 401 to 404). After adjusting the resonant capacitance, communication with the reader/writer 207 is started, and management information is read from the specified address of the memory unit 42 or management information is written to the specified address of the memory unit 42 in accordance with the operation required by the reader/writer 207.

At this time, in the case where the operation request of the reader/writer 207 is a read command, a clock signal to be supplied to the memory unit 42 is changed from the first clock signal (CLK1) to the second clock signal (CLK2) and information is read at high speed similarly to the first embodiment (Steps 406 to 408). Meanwhile, in the case where the operation request of the reader/writer 207 is a write command, an operation of writing information is executed in the first clock signal (CLK1) without changing the clock signal to be supplied to the memory unit 42.

In accordance with this embodiment, since the operation of writing information to the memory unit 42 is performed with the first clock signal (CLK1), it is possible to reduce the power consumed by the memory unit 42. In general, the power consumption of the operation of writing information is larger than that of the operation of reading information in many cases. By suppressing the power consumption at the time of writing information, it is possible to reduce the power consumption for writing with an increase in the memory size, for example.

### <Fourth embodiment>

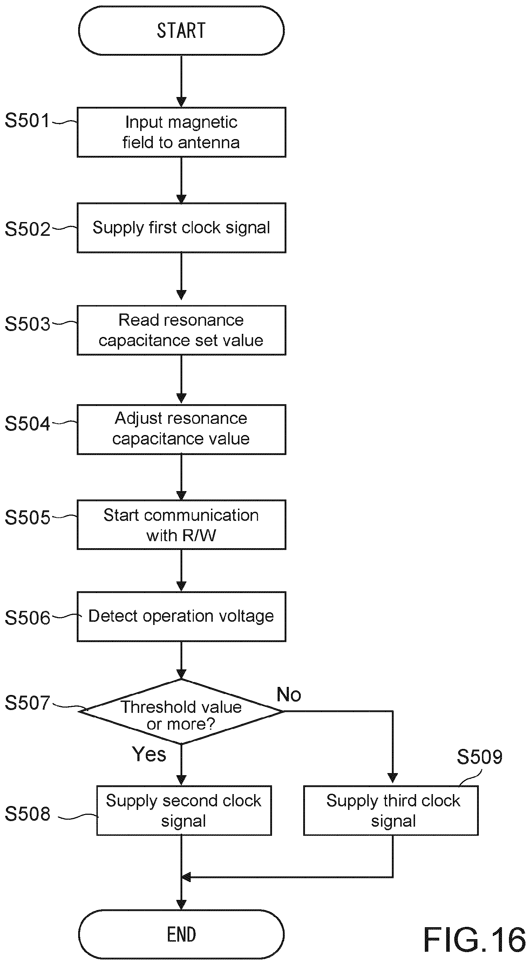

Fig. 16 is a flowchart showing an example of a method of driving a cartridge memory according to a fourth embodiment of the present technology. Hereinafter, configurations different from those in the first embodiment will be mainly described, and configurations similar to those in the first embodiment will be denoted by similar reference symbols, and description thereof will be omitted or simplified.

The cartridge memory according to this embodiment includes a monitoring unit that monitors the generated voltages of the voltage generation unit 41, and is configured to select a frequency of two or more clock signals on the basis of the output of the monitoring unit. This allows variable control of the clock signal (access speed) to be supplied to the memory unit 42 by looking at the power margin of the voltage generation unit 41. The configuration of the above-mentioned monitoring unit is not particularly limited, and it is possible to monitor the generated voltage of the voltage generation unit 41 on the basis of the current value of the voltage adjusting circuit (regulator), the current value of the protection circuit, or the like.

As shown in Fig. 16, when the activation voltage is generated by inputting a magnetic field to the antenna coil 32, the control unit 44 reads the resonant capacitance set value from the memory unit 42 with the first clock signal (CLK1) and sets the read value to the resonant capacitance adjustment unit 46 (Steps 501 to 504). After adjusting the resonant capacitance, communication with the reader/writer 207 is started, and management information is read from the specified address of the memory unit 42 or management information is written to the specified address of the memory unit 42 in accordance with the operation requested by the reader/writer 207 (Step 505) .

At this time, the control unit 44 detects the generated voltage of the voltage generation unit 41 (the generated voltage after adjusting the resonant capacitance), and selects the clock frequency at the time when information is read/written from/to the memory unit 42 depending on the magnitude of the voltage (Steps 507 to 509). In this example, the clock signal generation unit 43 is configured to be capable of selecting the second clock signal (CLK2, 3.39 MHz) and the third clock signal (CLK3) in addition to the first clock signal (CLK1, 848 kHz).

The frequency of the third clock signal (third frequency) can be set to a suitable value (in this example, 1.69 MHz) higher than the first clock signal (first frequency) and lower than the second clock signal (second frequency).

The control unit 44 determines whether or not the magnitude of the detected voltage is equal to or greater than a threshold value, and supplies, in the case where the magnitude of the detected voltage is equal to or greater than the threshold value, the second clock signal (CLK2) to the memory unit 42 to perform an operation of reading information or an operation of writing information (Steps 507 and 508). Meanwhile, the control unit 44 supplies, in the case where the magnitude of the detected voltage is less than the threshold value, the third clock signal (CLK3) to the memory unit 42 to perform an operation of reading information or an operation of writing information (Steps 507 and 509).

Although the embodiments of the present technology have been described above, it goes without saying that the present technology is not limited to the above-described embodiments and various modifications can be made.

For example, in the above-mentioned embodiments, the cartridge memory mounted on the magnetic tape cartridge of the LTO standard has been described as an example, but the present technology is not limited thereto and is applicable also to a cartridge memory for a magnetic tape cartridge of another standard other than LTO.

Further, the present technology is applicable also to an information recording medium other than the magnetic tape, e.g., optical discs, magneto-optical discs, semiconductor memories, or cartridge memories for portable hard disc drives.

Further, the present technology is not limited to the cartridge memory mounted on the information recording cartridge, and the present technology is applicable also to commuter passes, entrance/exit control cards for expressways or buildings, as well as ID tags attached to electronic apparatuses, vehicles, robots, logistics products, book collections, and the like.

### Reference Signs List

- 11: cartridge case
- 12: magnetic tape
- 32: antenna coil
- 33: IC chip
- 41: voltage generation unit
- 42: memory unit
- 43: clock signal generation unit
- 44: control unit
- 46: resonant capacitance adjustment unit
- 47: power source unit
- 48: reference voltage adjustment unit
- 100: tape cartridge
- 200: tape drive device
- CM,CM1: cartridge memory

## Claims

1. A non-contact communication medium, comprising:
a voltage generation unit (41) that includes an antenna coil (32) for transmission/reception, and is configured to receive a signal magnetic field from an external device (207) to generate a voltage;
a memory unit (42) configured to store a circuit parameter set in the voltage generation unit (41), and predetermined management information;
a clock signal generation unit (43) configured to selectively generate clock signals having two or more different frequencies; and
a control unit (44) configured to select a frequency of a clock signal to be supplied to the memory unit (42) from the clock signal generation unit (43);
wherein the non-contact communication medium is configured to transmit the predetermined management information to the external device (207); **characterized in that**
the control unit (44) is configured to select, when reading the circuit parameter, a first clock signal of a first frequency and select, when reading the predetermined management information, a second clock signal of a second frequency higher than the first frequency;
wherein the voltage generation unit (41) is configured to increase an electric power drawn from the antenna coil (32) based on the circuit parameter.

2. The non-contact communication medium according to claim 1, wherein
the voltage generation unit (41) includes a resonant circuit and a resonant capacitance adjustment unit (46), the resonant circuit including the antenna coil (32), the resonant capacitance adjustment unit (46) adjusting a resonant frequency of the resonant circuit, and
the memory unit (42) is configured to store, as the circuit parameter, a resonant capacitance value set in the resonant capacitance adjustment unit (46).

3. The non-contact communication medium according to claim 1 or 2, wherein
the voltage generation unit (41) further includes a power source circuit (47) configured to generate a voltage from the resonant circuit, and
the memory unit (42) is configured to store, as the circuit parameter, a reference voltage adjustment value for setting a reference voltage of the power source circuit (47).

4. The non-contact communication medium according to any one of claim 1 to 3, wherein
the control unit (44) is configured to select the first clock signal when writing information to the memory unit (42).

5. The non-contact communication medium according to any one of the previous claims, wherein
the control unit (44) is configured to select a frequency of the clock signal on a basis of an operation request from the external device (207).

6. The non-contact communication medium according to any one of the previous claims, further comprising
a monitoring unit configured to monitor a generated voltage of the voltage generation unit (41), wherein
the control unit (44) is configured to select a frequency of the two or more clock signals on a basis of output of the monitoring unit.

7. The non-contact communication medium according to any one of the previous claims, wherein
the clock signal generation unit (43) is configured to generate a clock signal of a frequency multiplied by the frequency of the signal magnetic field.

8. A recording medium cartridge (100), comprising:
an information recording medium (12);
a cartridge body (11) that houses the information recording medium (12); and
a non-contact communication medium according to claim 1, the non-contact communication medium being housed in the cartridge body.

9. A method of driving a non-contact communication medium, comprising:
reading from a memory unit (42), with a clock signal of a first frequency, a circuit parameter of a voltage generation unit (41) that generates a voltage on a basis of a signal magnetic field from an external device (207) received via an antenna coil (32);
increasing an electric power drawn from the antenna coil (32) based on the circuit parameter;
reading, with a clock signal of a second frequency higher than the first frequency, predetermined management information from the memory unit (42), and transmitting the read predetermined management information to the external device (207).

10. The method of driving a non-contact communication medium according to claim 9, wherein
the circuit parameter is a resonant capacitance value of a resonant circuit including the antenna coil (32).

11. The method of driving a non-contact communication medium according to claim 9, wherein
the circuit parameter is a reference voltage adjustment value for setting a reference voltage of the voltage generation unit (41).

12. A program comprising instructions to cause the non-contact communication medium of claim 1 to execute the method of claim 9.

## Patentansprüche

1. Kontaktloses Kommunikationsmedium, aufweisend:
eine Spannungserzeugungseinheit (41), die eine Antennenspule (32) zum Senden/Empfangen aufweist und zum Empfangen eines Signalmagnetfeldes von einer externen Vorrichtung (207) ausgebildet ist, um eine Spannung zu empfangen;
eine Speichereinheit (42), die zum Speichern eines Schaltungsparametersatzes in der Spannungserzeugungseinheit (41) und vorgegebener Verwaltungsinformationen ausgebildet ist;
eine Taktsignalerzeugungseinheit (43), die zum selektiven Erzeugen von Taktsignalen mit zwei oder mehr verschiedenen Frequenzen ausgebildet ist; und
eine Steuereinheit (44), die so ausgebildet ist, dass sie eine Frequenz eines Taktsignals auswählt, das von der Taktsignalerzeugungseinheit (43) zur Speichereinheit (42) geliefert werden soll;
wobei das kontaktlose Kommunikationsmedium zum Senden der vorgegebenen Verwaltungsinformationen an die externe Vorrichtung (207) ausgebildet ist; **dadurch gekennzeichnet, dass**
die Steuereinheit (44) so ausgebildet ist, dass sie beim Auslesen des Schaltungsparameters ein erstes Taktsignal einer ersten Frequenz auswählt und beim Auslesen der vorgegebenen Verwaltungsinformationen ein zweites Taktsignal einer zweiten Frequenz auswählt, die höher als die erste Frequenz ist;
wobei die Spannungserzeugungseinheit (41) so ausgebildet ist, dass sie eine von der Antennenspule (32) aufgenommene elektrische Leistung basierend auf dem Schaltungsparameter erhöht.

2. Kontaktloses Kommunikationsmedium nach Anspruch 1, wobei
die Spannungserzeugungseinheit (41) einen Resonanzkreis und eine Resonanzkapazitätsanpassungseinheit (46) aufweist, wobei der Resonanzkreis die Antennenspule (32) aufweist, die Resonanzkapazitätsanpassungseinheit (46) eine Resonanzfrequenz des Resonanzkreises anpasst, und
die Speichereinheit (42) so ausgebildet ist, dass sie einen in der Resonanzkapazitätsanpassungseinheit (46) eingestellten Resonanzkapazitätswert als den Schaltungsparameter speichert.

3. Kontaktloses Kommunikationsmedium nach Anspruch 1 oder 2, wobei
die Spannungserzeugungseinheit (41) ferner eine Leistungsquellenschaltung (47) aufweist, die zum Erzeugen einer Spannung aus dem Resonanzkreis ausgebildet ist, und
die Speichereinheit (42) so ausgebildet ist, dass sie einen Referenzspannungswert zum Einstellen einer Referenzspannung der Leistungsquellenschaltung (47) als den Schaltungsparameter speichert.

4. Kontaktloses Kommunikationssystem nach einem der Ansprüche 1 bis 3, wobei
die Steuereinheit (44) so ausgebildet ist, dass sie beim Schreiben von Informationen in die Speichereinheit (42) das erste Taktsignal auswählt.

5. Kontaktloses Kommunikationssystem nach einem der vorhergehenden Ansprüche, wobei
die Steuereinheit (44) so ausgebildet ist, dass sie eine Frequenz des Taktsignals auf einer Basis einer Betriebsanforderung von der externen Vorrichtung (207) auswählt.

6. Kontaktloses Kommunikationssystem nach einem der vorhergehenden Ansprüche, ferner aufweisend:
eine Überwachungseinheit, die zum Überwachen einer erzeugten Spannung der Spannungserzeugungseinheit (41) ausgebildet ist, wobei
die Steuereinheit (44) so ausgebildet ist, dass sie eine Frequenz der zwei oder mehr Taktsignale auf einer Basis einer Ausgabe der Überwachungseinheit auswählt.

7. Kontaktloses Kommunikationssystem nach einem der vorhergehenden Ansprüche, wobei
die Taktsignalerzeugungseinheit (43) so ausgebildet ist, dass sie ein Taktsignal einer Frequenz multipliziert mit der Frequenz des Signalmagnetfelds erzeugt.

8. Aufzeichnungsmedienkassette (100), umfassend:
ein Informationsaufzeichnungsmedium (12);
einen Kassettenkörper (11), der das Informationsaufzeichnungsmedium (12) beherbergt; und
ein kontaktloses Kommunikationsmedium nach Anspruch 1, wobei das kontaktlose Kommunikationsmedium im Kassettenkörper untergebracht ist.

9. Verfahren zur Ansteuerung eines kontaktlosen Kommunikationsmediums, umfassend:
Auslesen eines Schaltungsparameters einer Spannungserzeugungseinheit (41), die eine Spannung auf einer Basis eines von einer externen Vorrichtung (207) über eine Antennenspule (32) empfangenen Signalmagnetfelds erzeugt, aus einer ersten Speichereinheit (42) mit einem Taktsignal einer ersten Frequenz;
Erhöhen einer von der Antennenspule (32) aufgenommenen Leistung (32) basierend auf dem Schaltungsparameter;
Auslesen von vorgegebenen Verwaltungsinformationen aus der Speichereinheit (42) mit einem Taktsignal einer zweiten Frequenz, die höher als die erste Frequenz ist, und Senden der vorgegebenen Verwaltungsinformationen an die externe Vorrichtung (207).

10. Verfahren zur Ansteuerung eines kontaktlosen Kommunikationsmediums nach Anspruch 9, wobei
der Schaltungsparameter ein Resonanzkapazitätswert eines Resonanzkreises ist, der die Antennenspule (32) aufweist.

11. Verfahren zur Ansteuerung eines kontaktlosen Kommunikationsmediums nach Anspruch 9, wobei
der Schaltungsparameter ein Referenzspannungsanpassungswert zum Einstellen einer Referenzspannung der Spannungserzeugungseinheit (41) ist.

12. Programm, aufweisend Anweisungen zum Veranlassen des kontaktlosen Kommunikationsmediums nach Anspruch 1 zum Ausführen des Verfahrens nach Anspruch 9.

## Revendications

1. Support de communication sans contact, comprenant :
une unité de génération de tension (41) qui inclut une bobine d'antenne (32) pour une transmission/réception, et est configurée pour recevoir un champ magnétique de signal provenant d'un dispositif externe (207) pour générer une tension ;
une unité de mémoire (42) configurée pour stocker un ensemble de paramètres de circuit dans l'unité de génération de tension (41), et des informations de gestion prédéterminées ;
une unité de génération de signal d'horloge (43) configurée pour générer de manière sélective des signaux d'horloge ayant deux fréquences différentes, ou plus ; et
une unité de commande (44) configurée pour sélectionner une fréquence d'un signal d'horloge à fournir à l'unité de mémoire (42) provenant de l'unité de génération de signal d'horloge (43) ;
le support de communication sans contact étant configuré pour transmettre les informations de gestion prédéterminées au dispositif externe (207) ; **caractérisé en ce que**
l'unité de commande (44) est configurée pour sélectionner, lors de la lecture du paramètre de circuit, un premier signal d'horloge d'une première fréquence et sélectionner, lors de la lecture des informations de gestion prédéterminées, un deuxième signal d'horloge d'une deuxième fréquence supérieure à la première fréquence ;
l'unité de génération de tension (41) étant configurée pour augmenter une puissance électrique tirée de la bobine d'antenne (32) sur la base du paramètre de circuit.

2. Support de communication sans contact selon la revendication 1,
l'unité de génération de tension (41) incluant un circuit résonnant et une unité de réglage de capacitance résonnante (46), le circuit résonnant incluant la bobine d'antenne (32), l'unité de réglage de capacitance résonnante (46) réglant une fréquence résonnante du circuit résonnant, et
l'unité de mémoire (42) est configurée pour stocker, en tant que paramètre de circuit, un ensemble de valeurs de capacitance résonnante dans l'unité de réglage de capacitance résonnante (46).

3. Support de communication sans contact selon la revendication 1 ou 2,
l'unité de génération de tension (41) incluant en outre un circuit de source de puissance (47) configuré pour générer une tension provenant du circuit résonnant, et
l'unité de mémoire (42) étant configurée pour stocker, en tant que paramètre de circuit, une valeur de réglage de tension de référence pour régler une tension de référence du circuit de source de puissance (47) .

4. Support de communication sans contact selon l'une quelconque des revendications 1 à 3,
l'unité de commande (44) étant configurée pour sélectionner le premier signal d'horloge lors de l'écriture des informations sur l'unité de mémoire (42).

5. Support de communication sans contact selon l'une quelconque des revendications précédentes,
l'unité de commande (44) étant configurée pour sélectionner une fréquence du signal d'horloge sur la base d'une requête de fonctionnement provenant du dispositif externe (207).

6. Support de communication sans contact selon l'une quelconque des revendications précédentes, comprenant en outre
une unité de surveillance configurée pour surveiller une tension générée de l'unité de génération de tension (41),
l'unité de commande (44) étant configurée pour sélectionner une fréquence des deux signaux d'horloge, ou plus, sur la base d'une sortie de l'unité de surveillance.

7. Support de communication sans contact selon l'une quelconque des revendications précédentes,
l'unité de génération de signal d'horloge (43) étant configurée pour générer un signal d'horloge d'une fréquence multipliée par la fréquence du champ magnétique de signal.

8. Cartouche de support d'enregistrement (100), comprenant :
un support d'enregistrement d'informations (12) ;
un corps de cartouche (11) qui héberge le support d'enregistrement d'informations (12) ; et
un support de communication sans contact selon la revendication 1, le support de communication sans contact étant hébergé dans le corps de cartouche.

9. Procédé de commande d'un support de communication sans contact, comprenant :
la lecture à partir d'une unité de mémoire (42), avec un signal d'horloge d'une première fréquence, d'un paramètre de circuit d'une unité de génération de tension (41) qui génère une tension sur la base d'un champ magnétique de signal provenant d'un dispositif externe (207) reçu via une bobine d'antenne (32) ;
l'augmentation d'une puissance électrique tirée de la bobine d'antenne (32) sur la base du paramètre de circuit ;
la lecture, avec un signal d'horloge d'une deuxième fréquence supérieure à la première fréquence, d'informations de gestion prédéterminées provenant de l'unité de mémoire (42), et la transmission des informations de gestion prédéterminées lues au dispositif externe (207).

10. Procédé de commande d'un support de communication sans contact selon la revendication 9,
le paramètre de circuit étant une valeur de capacitance résonnante d'un circuit résonnant incluant la bobine d'antenne (32).

11. Procédé de commande d'un support de communication sans contact selon la revendication 9,
le paramètre de circuit étant une valeur de réglage de tension de référence pour régler une tension de référence de l'unité de génération de tension (41).

12. Programme comprenant des instructions permettant d'amener le support de communication sans contact selon la revendication 1 à exécuter le procédé selon la revendication 9.
